(19) Europäisches Patentamt
European Patent Office
Office européen des brevets

(11) **EP 4 637 018 A1**

(12) **EUROPEAN PATENT APPLICATION**
published in accordance with Art. 153(4) EPC

(43) Date of publication:
**22.10.2025 Bulletin 2025/43**

(21) Application number: **23909498.0**

(22) Date of filing: **19.10.2023**

(51) International Patent Classification (IPC):
**H02M 7/5387** (2007.01)   **H02M 1/088** (2006.01)

(52) Cooperative Patent Classification (CPC):
**H02M 1/088; H02M 7/5387; Y02B 70/10**

(86) International application number:
**PCT/CN2023/125313**

(87) International publication number:
**WO 2024/139564 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211729940**

(71) Applicant: **Hoymiles Power Electronics Inc.
Hangzhou, Zhejiang 310015 (CN)**

(72) Inventors:
• **SHI, Keyan**
  **Hangzhou, Zhejiang 310015 (CN)**
• **YU, Hongbin**
  **Hangzhou, Zhejiang 310015 (CN)**
• **ZHAO, Yi**
  **Hangzhou, Zhejiang 310015 (CN)**
• **YANG, Bo**
  **Hangzhou, Zhejiang 310015 (CN)**

(74) Representative: **Meyer-Dulheuer MD Legal
Patentanwälte PartG mbB
Hanauer Landstr. 287-289
60314 Frankfurt am Main (DE)**

(54) **DC/AC CIRCUIT CONTROL METHOD AND DC/AC CIRCUIT**

(57) A DC/AC circuit control method and a DC/AC circuit are provided. The control method includes: determining switching frequency of a switching element in an input bridge arm and a switching element in an output bridge arm and a phase shift angle of a DC/AC circuit based on an output voltage and an input voltage of the DC/AC circuit, a resonant parameter of a resonant unit, and an instantaneous control instruction representing power transmission.

Determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission — S302

Generating a drive signal based on the phase shift angle and the switching frequency to drive the switching element in the input bridge arm and the switching element in the output bridge arm — S304

FIG. 3

**Description**

**CROSS-REFERENCE TO RELATED APPLICATION**

This application claims priority to Chinese patent application No. 202211729940.5, filed on December 30, 2022, titled "DC/AC CIRCUIT CONTROL METHOD AND DC/AC CIRCUIT", the content of which is hereby incorporated by reference in its entirety.

**TECHNICAL FIELD**

The present invention generally relates to the field of inversion, and in particular, to a DC/AC circuit control method and a DC/AC circuit.

**BACKGROUND**

A DC/AC circuit is widely applied in power conversion scenarios such as renewable energy generation, energy storage systems, and electric vehicle charging.
In a resonant soft-switching DC/AC circuit, due to operating requirements of soft-switching, a switching time point is limited. It has a high requirement for a switching frequency and a switching time point of a power switch component to implement both operation and power control of the soft-switching. A conventional DC/AC circuit controls a grid-connected current or a voltage of an alternating current side based on feedback control of a current/voltage of the alternating current side, and requires an extra sensor and an extra sampling circuit, which has a relatively high cost and a slow response speed of a feedback loop.

**SUMMARY**

According to various embodiments of the present invention, a DC/AC circuit control method and a DC/AC circuit are provided.
A DC/AC circuit control method is provided in the present invention. The DC/AC circuit is configured to convert a direct current into an alternating current and includes an input bridge arm, an output bridge arm, and a resonant unit connected between the input bridge arm and the output bridge arm. The method includes: determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission.
In an embodiment, when the input bridge arm includes a half-bridge structure, the phase shift angle includes a first phase shift angle between a bridge-arm output voltage of the input bridge arm and a bridge-arm output voltage of the output bridge arm. The switching frequency is determined based on the first phase shift angle, the output voltage and the input voltage of the DC/AC circuit, the resonant parameter of the resonant unit, and the instantaneous control instruction.
In an embodiment, when the input bridge arm includes a full bridge structure, the phase shift angle includes a first phase shift angle between a bridge-arm output voltage of the input bridge arm and a bridge-arm output voltage of the output bridge arm and a second phase shift angle between output voltages of two half-bridge arms of the input bridge arm. The switching frequency is determined based on the first phase shift angle, the second phase shift angle, the output voltage and the input voltage of the DC/AC circuit, the resonant parameter of the resonant unit, and the instantaneous control instruction.
In an embodiment, the DC/AC circuit further includes a transforming unit connected between the input bridge arm and the output bridge arm. The switching frequency is determined based on the first phase shift angle, the second phase shift angle, the output voltage and the input voltage of the DC/AC circuit, a resonant cavity parameter of the resonant unit, the instantaneous control instruction, and a transforming parameter of the transforming unit.
In an embodiment, the instantaneous control instruction includes an instantaneous power instruction or an instantaneous current instruction.
In an embodiment, the instantaneous control instruction is calculated based on a grid voltage phase, a system power instruction, and a power factor.
In an embodiment, the second phase shift angle denoted as $\theta$ satisfies the following formula:

$$\theta < 2\arccos\left(\sqrt{M}\right),$$

M satisfies the following formula: $M = \dfrac{|V_g|/2}{nV_{in}}$ , $V_{in}$ represents the input voltage of the DC/AC circuit, $V_g$ represents a transient value of the output voltage of the DC/AC circuit, and n represents the transforming parameter of the transforming unit.

In an embodiment, the first phase shift angle denoted as $\varphi$ satisfies the following formula:

$$\varphi > \arccos\left(\frac{M}{\cos\dfrac{\theta}{2}}\right).$$

In an embodiment, a drive signal is generated based on the phase shift angle and the switching frequency to drive the switching element in the input bridge arm and the switching element in the output bridge arm.

The present invention further provides a DC/AC circuit. The DC/AC circuit includes an input bridge arm, an output bridge arm, a resonant unit connected between the input bridge arm and the output bridge arm, and a controller connected to the input bridge arm and the output bridge arm. The controller is configured for determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission.

In an embodiment, the input bridge arm includes a half-bridge structure. The phase shift angle includes a first phase shift angle between a bridge-arm output voltage of the input bridge arm and a bridge-arm output voltage of the output bridge arm. The switching frequency is determined based on the first phase shift angle, the output voltage and the input voltage of the DC/AC circuit, the resonant parameter of the resonant unit, and the instantaneous control instruction.

In an embodiment, the input bridge arm includes a full bridge structure. The phase shift angle includes a first phase shift angle between a bridge-arm output voltage of the input bridge arm and a bridge-arm output voltage of the output bridge arm and a second phase shift angle between output voltages of two half-bridge arms of the input bridge arm. The switching frequency is determined based on the first phase shift angle, the second phase shift angle, the output voltage and the input voltage of the DC/AC circuit, the resonant parameter of the resonant unit, and the instantaneous control instruction.

In an embodiment, the circuit further includes a transforming unit connected between the input bridge arm and the output bridge arm. The switching frequency is determined based on the first phase shift angle, the second phase shift angle, the output voltage and the input voltage of the DC/AC circuit, a resonant cavity parameter of the resonant unit, the instantaneous control instruction, and a transforming parameter of the transforming unit.

In an embodiment, the instantaneous control instruction includes an instantaneous power instruction or an instantaneous current instruction.

In an embodiment, the instantaneous control instruction is calculated based on a grid voltage phase, a system power instruction, and a power factor.

In an embodiment, the second phase shift angle denoted as $\theta$ satisfies the following formula:

$$\theta < 2\arccos\left(\sqrt{M}\right),$$

M satisfies the following formula: $M = \dfrac{\left|V_g\right|/2}{nV_{in}}$, $V_{in}$ represents the input voltage of the DC/AC circuit, $V_g$ represents a transient value of the output voltage of the DC/AC circuit, and n represents the transforming parameter of the transforming unit.

In an embodiment, the first phase shift angle denoted as $\varphi$ satisfies the following formula:

$$\varphi > \arccos\left(\frac{M}{\cos\dfrac{\theta}{2}}\right).$$

In an embodiment, the output bridge arm includes a cycloconverter configured to perform an alternating-alternating transformation.

In an embodiment, the controller is configured to generate a drive signal based on the phase shift angle and the switching frequency to drive the switching element in the input bridge arm and the switching element in the output bridge arm.

The present invention further provides a DC/AC circuit control method. The DC/AC circuit is configured to convert a direct current into an alternating current, and includes an input bridge arm, an output bridge arm, and a resonant unit connected between the input bridge arm and the output bridge arm. The method includes: determining a second phase shift angle between output voltages of two half-bridge arms of the input bridge arm based on the output voltage and input voltage of the DC/AC circuit. The input bridge arm includes a full bridge structure. The second phase shift angle denoted as $\theta$ satisfies the following formula: $\theta < 2\arccos\left(\sqrt{M}\right)$,

M satisfies the following formula: $M = \dfrac{|V_g|/2}{V_{in}}$, $V_{in}$ represents the input voltage of the DC/AC circuit, $V_g$ represents a transient value of the output voltage of the DC/AC circuit, and n represents the transforming parameter of the transforming unit.

In an embodiment, a first phase shift angle denoted as $\varphi$ between the bridge-arm output voltage of the input bridge arm and the bridge-arm output voltage of the output bridge arm satisfies the following formula:

$$\varphi > \arccos\left(\frac{M}{\cos\dfrac{\theta}{2}}\right).$$

In an embodiment, the switching frequency is determined based on the first phase shift angle, a second phase shift angle, an output voltage and an input voltage of the DC/AC circuit, a resonant parameter of the resonant unit, and an instantaneous control instruction representing power transmission.

In an embodiment, the DC/AC circuit further includes a transforming unit connected between the input bridge arm and the output bridge arm. The switching frequency is determined based on the first phase shift angle, the second phase shift angle, the output voltage and the input voltage of the DC/AC circuit, a resonant cavity parameter of the resonant unit, the instantaneous control instruction, and a transforming parameter of the transforming unit.

In an embodiment, the second phase shift angle denoted as $\theta$ satisfies the following formula: $\theta < 2\arccos\left(\sqrt{M}\right)$,

M satisfies the following formula: $M = \dfrac{|V_g|/2}{nV_{in}}$, $V_{in}$ represents the input voltage of the DC/AC circuit, $V_g$ represents a transient value of the output voltage of the DC/AC circuit, and n represents the transforming parameter of the transforming unit.

In an embodiment, the instantaneous control instruction includes an instantaneous power instruction or an instantaneous current instruction.

In an embodiment, the instantaneous control instruction is calculated based on a grid voltage phase, a system power instruction, and a power factor.

In an embodiment, a drive signal is generated based on the first phase shift angle, the second phase shift angle and the switching frequency to drive the switching element in the input bridge arm and the switching element in the output bridge arm.

The present invention further provides a DC/AC circuit. The DC/AC circuit includes an input bridge arm, an output bridge arm, a resonant unit connected between the input bridge arm and the output bridge arm, and a controller connected to the input bridge arm and the output bridge arm. The controller is configured for determining a second phase shift angle between input voltages of two half-bridge arms of the input bridge arm based on the output voltage and the input voltage of the DC/AC circuit. The input bridge arm includes a full bridge structure. The second phase shift angle denoted as $\theta$ satisfies the following formula: $\theta < 2\arccos\left(\sqrt{M}\right)$,

M satisfies the following formula: $M = \dfrac{|V_g|/2}{V_{in}}$, $V_{in}$ represents the input voltage of the DC/AC circuit, and $V_g$ represents a transient value of the output voltage of the DC/AC circuit.

In an embodiment, a first phase shift angle denoted as $\varphi$ between the bridge-arm output voltage of the input bridge arm and the bridge-arm output voltage of the output bridge arm satisfies the following formula: $\varphi > \arccos\left(\dfrac{M}{\cos\dfrac{\theta}{2}}\right).$

In an embodiment, switching frequency is determined based on the first phase shift angle, the second phase shift angle, the output voltage and the input voltage of the DC/AC circuit, a resonant parameter of the resonant unit, and an instantaneous control instruction representing power transmission.

In an embodiment, the DC/AC circuit further includes a transforming unit connected between the input bridge arm and the output bridge arm. The switching frequency is determined based on the first phase shift angle, the second phase shift angle, the output voltage and the input voltage of the DC/AC circuit, a resonant cavity parameter of the resonant unit, the instantaneous control instruction, and a transforming parameter of the transforming unit.

In an embodiment, the second phase shift angle denoted as $\theta$ satisfies the following formula:

$$\theta < 2 \arccos\left(\sqrt{M}\right),$$

M satisfies the following formula: $M$, $V_{in}$ represents the input voltage of the DC/AC circuit, $V_g$ represents a transient value of the output voltage of the DC/AC circuit, and n represents the transforming parameter of the transforming unit.

In an embodiment, the instantaneous control instruction includes an instantaneous power instruction or an instantaneous current instruction.

In an embodiment, the instantaneous control instruction is calculated based on a grid voltage phase, a system power instruction, and a power factor.

In an embodiment, the output bridge arm includes a cycloconverter configured to perform an alternating-alternating transformation.

In an embodiment, the controller is configured to generate a drive signal based on the first phase shift angle, the second phase shift angle and the switching frequency to drive the switching element in the input bridge arm and the switching element in the output bridge arm.

Compared with related technology, in the present invention, the switching frequency of the switching element of the input bridge arm and the output bridge arm is determined based on the phase shift angle and the instantaneous control instruction of the DC/AC circuit. The drive signal is generated based on the phase shift angle and the switching frequency to drive the switching element in the input bridge arm and the switching element in the output bridge arm. In the present invention, an open-loop predictive control of the instantaneous power or the instantaneous current may be realized by cooperation of the phase shift angle of the DC/AC circuit and the switching frequency, the DC/AC circuit may be simple to control, and response speed of the DC/AC circuit may be fast. In addition, the control method may eliminate a current sampling circuit, simplify a circuit structure, and reduce costs.

Details of one or more embodiments of the present invention are proposed in the following accompanying drawings and descriptions, so that other features, objects, and advantages of the present invention are more easily understood.

**BRIEF DESCRIPTION OF THE DRAWINGS**

For a better description of the embodiments and/or examples of the present invention disclosed herein, reference may be made to one or more of the accompanying drawings. Additional details or examples used to describe the accompanying drawings should not be construed as limiting the scope of any one of the disclosed invention, the presently described embodiments and/or examples, and the best pattern of the present invention as understood.

FIG. 1 is a schematic diagram of a DC/AC circuit in an embodiment of the present invention.
FIG. 2 is a schematic diagram of a DC/AC circuit in another embodiment of the present invention.
FIG. 3 is a flowchart diagram of a DC/AC circuit control method in an embodiment of the present invention.
FIG. 4 is a flowchart diagram of a determining method of a second phase shift angle and a first phase shift angle in an embodiment of the present invention.
FIG. 5 is a flowchart diagram of switching frequency correction in an embodiment of the present invention.
FIG. 6 is an overall flowchart diagram of a DC/AC circuit control method in an embodiment of the present invention.
FIG. 7 is a circuit principal diagram of a DC/AC circuit in an embodiment of the present invention.
FIG. 8 is a schematic diagram of an operating waveform of an output voltage in a positive half cycle in an embodiment of the present invention.
FIG. 9 is a schematic diagram of an operating waveform of an output voltage in a negative half cycle in an embodiment of the present invention.
FIG. 10 is an equivalent model diagram of a DC/AC circuit in an embodiment of the present invention.
FIG. 11 is a control block diagram of a controller in an embodiment of the present invention.

**DETAILED DESCRIPTION OF THE EMBODIMENT**

In order to make above objectives, solution, and advantages of the present invention more obvious and understandable, an explanation of a specific implementation of the present invention will be provided below in combination with drawings. It should be understood that the specific embodiments described herein are only used to explain the present invention and are not intended to limit the present invention. Based on the embodiments in the present invention, all other embodiments obtained by ordinary skill in the art without creative labor fall within the scope of protection of the present invention. In addition, it can be understood that although the efforts made in this development process may be complex and lengthy, for ordinary skill in the field related to the disclosed content of the invention, some design, manufacturing, or production changes made on the basis of the disclosed technical content are only conventional technical means and should not be understood as insufficient content disclosed in this invention.

The reference to "embodiments" in the invention means that specific features, structures, or characteristics described in conjunction with the embodiments may be included in at least one embodiment of this invention. A phrase appearing in various positions in the description does not necessarily refer to the same embodiment, nor is it an independent or alternative embodiment that is mutually exclusive with other embodiments. Those skill in the art will explicitly and implicitly understand that the embodiments described in the invention can be combined with other embodiments without conflict.

Unless otherwise defined, the technical or scientific terms referred to in the invention shall have the usual meanings understood by persons with common skills in the technical field to which the invention belongs. Words in the present invention such as "one", "a", "a kind of", and/or "the" do not specifically refer to singular, but may also include plural. The terms "include", "contain", "have" and any variations thereof referred to in the present invention are intended to cover non-exclusive inclusions. For example, a process, a method, a system, a product, or an apparatus that includes a series of steps or modules (units) is not limited to the listed steps or units, but may also include steps or units that are not listed, or may also include other steps or units inherent to the process, the method, the product, or the apparatus. The terms "junction", "connection", "coupling" and similar terms referred to in the present invention are not limited to physical or mechanical connections, but may include electrical connections, whether direct or indirect. The term "a plurality of" referred to in the present invention means greater than or equal to two. "And/or" describes an association relationship of associated objects, indicating that there can be three types of relationships. For example, "A and/or B" can represent: A exists alone, A and B exist simultaneously, and B exists alone. The terms "first", "second", "third", etc. mentioned in the present invention are only used to distinguish similar objects and do not represent a specific ranking for the objects.

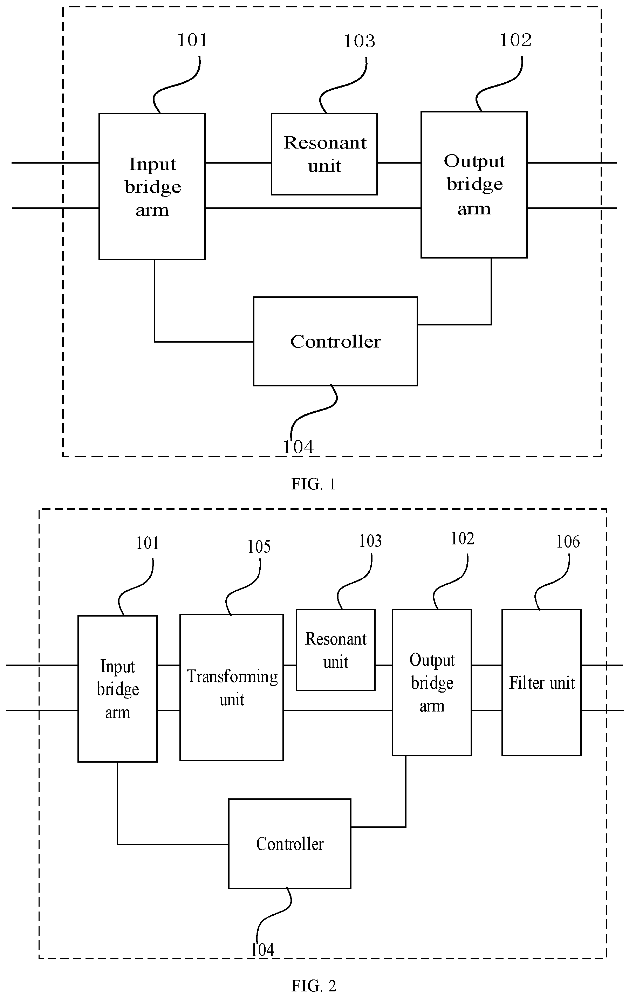

FIG. 1 is a schematic diagram of a DC/AC circuit in an embodiment of the present invention. The DC/AC circuit includes an input bridge arm 101, an output bridge arm 102, a resonant unit 103 connected between the input bridge arm 101 and the output bridge arm 102, and a controller 104 connected to the input bridge arm 101 and the output bridge arm 102.

The input bridge arm 101 may be an inverter unit including at least two switching elements, and the input bridge arm 101 is configured to invert a direct current into an alternating current.

The output bridge arm 102, for example, may include at least one cycloconverter, which includes a plurality of sets of switching elements configured to perform an alternating-alternating transformation. Each of the plurality of sets of the switching elements may include at least two switching elements reversely connected to each other. An output terminal of the output bridge arm 102 may provide an alternating output, such as provide to a power grid.

The resonant unit 103 is configured to realize soft-switching of the switching elements in the DC/AC circuit, thereby reducing circuit losses.

Circuit forms of the resonant unit 103 may include a plurality of structures such as a single L structure, a LC structure, a CLLC structure, and so on.

The controller 104 is configured to control the input bridge arm 101 and the output bridge arm 102, thereby realizing power conversion.

In some embodiments, referring to FIG. 2, the DC/AC circuit may further include a transforming unit 105 connected between the input bridge arm 101 and the output bridge arm 102. A primary side of the transforming unit 105 may be connected to the input bridge arm 101, and a secondary side of the transforming unit 105 is connected to the output bridge arm 102 via the resonant unit 103, and the transforming unit 105 is configured for boosting the input voltage of the DC/AC circuit.

In some embodiments, the DC/AC circuit may further include a filter unit 106 connected to an output terminal of the output bridge arm 102. The filter unit 106 is configured to filter.

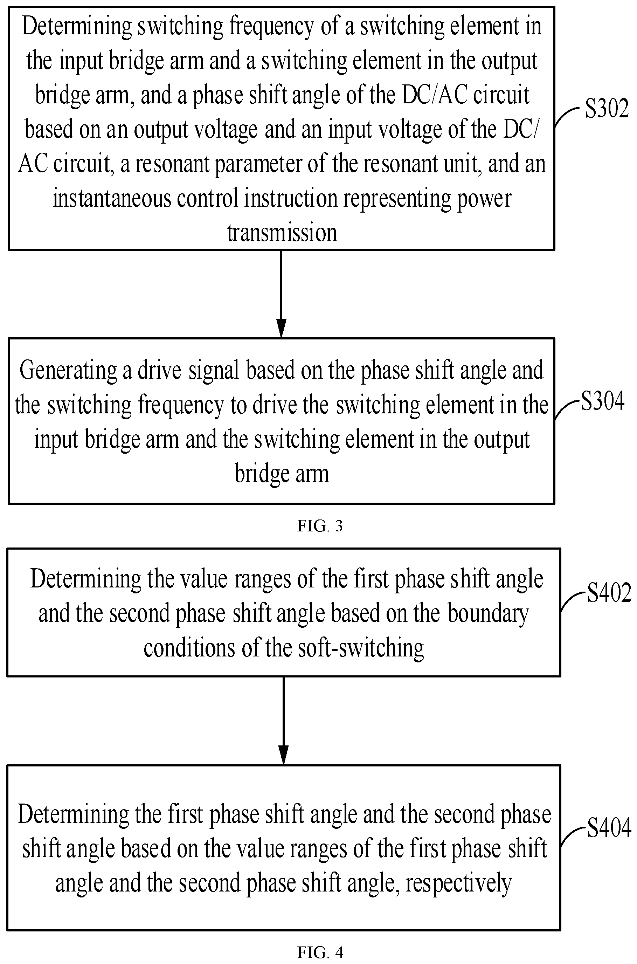

Based on the DC/AC circuit, the present invention provides a DC/AC circuit control method. Referring to FIG. 3, the method includes following step 302 and step 304.

Step 302 includes determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission.

The phase shift angle of the DC/AC circuit may satisfy an operating condition of soft-switching of the switching element in the input bridge arm and the switching element in the output bridge arm.

When the input bridge arm includes a half-bridge structure, the phase shift angle may include a first phase shift angle between a bridge-arm output voltage of the input bridge arm and a bridge-arm output voltage of the output bridge arm.

When the input bridge arm includes a full bridge structure, the phase shift angle may include a first phase shift angle between a bridge-arm output voltage of the input bridge arm and a bridge-arm output voltage of the output bridge arm and a second phase shift angle between output voltages of two half-bridge arms of the input bridge arm.

The instantaneous control instruction may include an instantaneous power instruction or an instantaneous current instruction.

An instantaneous power and an instantaneous current of the DC/AC circuit may relate to the switching frequency on a circuit model.

Step 304 may include generating a drive signal based on the phase shift angle and the switching frequency to drive the switching element in the input bridge arm and the switching element in the output bridge arm.

In an embodiment, the drive signal is generated based on the phase shift angle and the switching frequency to drive the switching element in the input bridge arm and the switching element in the output bridge arm.

An open-loop predictive control of the instantaneous power or the instantaneous current may be realized by cooperation of the phase shift angle of the DC/AC circuit and the switching frequency, such that the DC/AC circuit is simple to control and response speed is fast. In addition, the control method may eliminate a current sampling circuit, simplify a circuit structure, and reduce costs.

In an embodiment, when the input bridge arm includes a half-bridge structure, the phase shift angle may include a first phase shift angle between the bridge-arm output voltage of the input bridge arm and the bridge-arm output voltage of the output bridge arm. The switching frequency may be determined based on the first phase shift angle, the output voltage and the input voltage of the DC/AC circuit, the resonant parameter of the resonant unit, and the instantaneous control instruction.

The drive signal may be generated based on the first phase shift angle and the switching frequency.

The instantaneous control instruction may include an instantaneous power instruction or an instantaneous current instruction.

The instantaneous control instruction may be calculated based on a grid voltage phase, a system power instruction, and a power factor.

When the DC/AC circuit further includes a transforming unit connected between the input bridge arm and the output bridge arm, the switching frequency may be determined based on the first phase shift angle, the output voltage and the input voltage of the DC/AC circuit, the resonant parameter of the resonant unit, the instantaneous control instruction, and a transforming parameter of the transforming unit.

According to boundary conditions of the soft-switching, a value range of the first phase shift angle may be determined, and then a value of the first phase shift angle may be determined based on the value range of the first phase shift angle, so as to achieve zero-voltage switching of the switching elements in the DC/AC circuit over full power range.

Considering that the switching frequency includes a limited value, which means a frequency threshold, when the switching frequency is greater than the frequency threshold, the switching frequency may be required to be adjusted while adjusting the first phase shift angle.

Specifically, the switching frequency may be reconfirmed based on the frequency threshold. The first phase shift angle may be reconfirmed based on a reconfirmed switching frequency. The drive signal may be regenerated based on a reconfirmed first phase shift angle. and the reconfirmed switching frequency, so as to drive the switching element in the input bridge arm and the switching element in the output bridge arm.

In an embodiment, when the input bridge arm includes a full bridge structure, the phase shift angle may include a first phase shift angle between a bridge-arm output voltage of the input bridge arm and a bridge-arm output voltage of the output bridge arm and a second phase shift angle between output voltages of two half-bridge arms of the input bridge arm. The switching frequency may be determined based on the first phase shift angle, the second phase shift angle, the output voltage and the input voltage of the DC/AC circuit, the resonant parameter of the resonant unit, and the instantaneous control instruction.

A drive signal may be generated based on the first phase shift angle, the second phase shift angle and the switching frequency.

When the DC/AC circuit further includes a transforming unit connected between the input bridge arm and the output bridge arm, the switching frequency may be determined based on the first phase shift angle, the second phase shift angle, the instantaneous control instruction, the input voltage and the output voltage of the DC/AC circuit, a resonant cavity parameter of the resonant unit and a transforming parameter of the transforming unit.

The instantaneous control instruction may be calculated based on a grid voltage phase, a system power instruction, and a power factor.

The system power instruction may be positive or negative, representing positive and negative flow directions of power.

The system power instruction may be preset or obtained by other ways.

According to the boundary conditions of the soft-switching, value ranges of the first phase shift angle and the second phase shift angle may be determined, and then values of the first phase shift angle and the second phase shift angle may be determined based on the value ranges of the first phase shift angle and the second phase shift angle, respectively, so as to achieve zero-voltage switching of the switching elements in the DC/AC circuit over the full power range.

For values of the first phase shift angle and the second phase shift angle, referring to FIG. 4, the method may further include step 402 and step 404.

Step 402 may include determining the value ranges of the first phase shift angle and the second phase shift angle based on the boundary conditions of the soft-switching.

Step 404 may include determining the first phase shift angle and the second phase shift angle based on the value ranges of the first phase shift angle and the second phase shift angle, respectively.

The boundary conditions may include a first boundary condition and a second boundary condition. The first boundary condition is configured to limit an operation of the soft-switching of the switching element corresponding to the input bridge arm. The second boundary condition is configured to limit an operation of the soft-switching of the switching element corresponding to the output bridge arm.

Switching elements of the same bridge arm of the input bridge arm may be turned on complementarily. When one of the switching elements is turned off and the other one of the switching elements complementary thereto is turned on, a resonant current is less than 0 when the switching elements is switched, the zero-voltage switching of the switching elements may be realized. Similarly, for the output bridge arm, for two switching elements of the same bridge arm of the output bridge arm being turned on complementarily, when one of the switching elements is turned off and the other one of the switching elements complementary thereto is turned on, a resonant current is greater than 0 when the switching elements is switched, the zero-voltage switching of the switching elements may be realized. Based on this, the first boundary condition and the second boundary condition may be set based on time of the resonant current less than or greater than 0, respectively.

The first phase shift angle may be any values in the corresponding value range. The second phase shift angle may be any values in the corresponding value ranges.

Considering complexity and long calculating time of conventional phase shift angle calculation algorithms, in further embodiments, an improved method of determining the phase shift angle may be proposed. Specifically, the value of the second phase shift angle may be decoupled from the first phase shift angle, so the value range of the second phase shift angle may be directly determined based on the boundary conditions. Then, the first phase shift angle may be determined based on a determined second phase shift angle, reducing the complexity of determining the values of the first phase shift angle and the second phase shift angle and reducing the calculating time of the controller.

In an embodiment, when the input bridge arm includes a full bridge structure, a second phase shift angle between input voltages of two half-bridge arms of the input bridge arm may be determined based on an output voltage and an input voltage of the DC/AC circuit. The second phase shift angle denoted as θ may satisfy the following formula:

$\theta < 2\arccos\left(\sqrt{M}\right)$ , M may satisfy the following formula: $M = \dfrac{|V_g|/2}{V_{in}}$ , $V_{in}$ may represent the input voltage of the DC/AC circuit, and $V_g$ may represent a transient value of the output voltage of the DC/AC circuit.

In an embodiment, the first phase shift angle denoted as φ between the bridge-arm input voltage of the input bridge arm and the bridge-arm input voltage of the output voltage may satisfy the following formula:

$$\varphi > \arccos\left(\frac{M}{\cos\dfrac{\theta}{2}}\right).$$

In an embodiment, the DC/AC circuit may further include a transforming unit connected between the input bridge arm and the output bridge arm. The second phase shift angle denoted as θ may satisfy the following formula:

$\theta < 2\arccos\left(\sqrt{M}\right)$ , M may satisfy the following formula: $M = \dfrac{|V_g|/2}{nV_{in}}$ , $V_{in}$ may represent the input voltage of the DC/AC circuit, $V_g$ may represent a transient value of the output voltage of the DC/AC circuit, and n may represent the transforming parameter of the transforming unit.

An improved method of determining the phase shift angle may also be used in the DC/AC circuit or a DC-DC circuit that realize closed-loop control of current/power based on feedback control of alternating current/voltage. Therefore, an applicability of the improved method may be wild.

Therefore, in the embodiment of the present invention, complexity of determining the values of the first phase shift angle and the second phase shift angle may be reduced. A calculating time of the controller may be reduced. An applicability of the method of determining the phase shift angle is wide.

Considering that the switching frequency includes a limited value, which means a frequency threshold, when the switching frequency is greater than the frequency threshold, the switching frequency may be required to be adjusted while adjusting the first phase shift angle and the second phase shift angle.

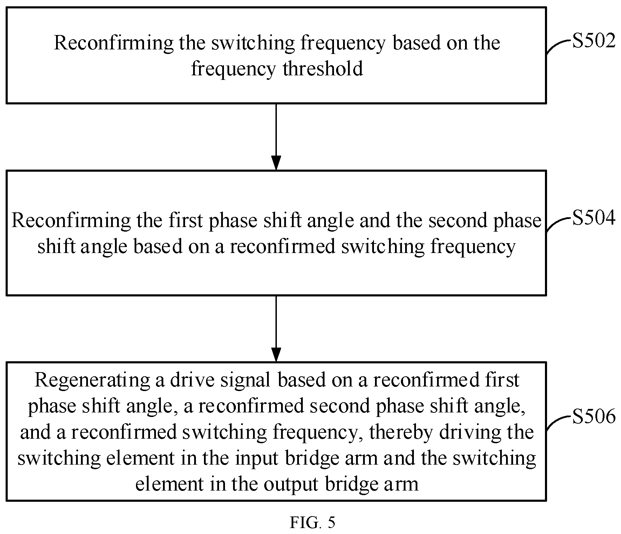

In an embodiment, referring to FIG. 5, when the switching frequency is greater than the frequency threshold, the method may further include the following step 502 to step 506.

Step 502 may include reconfirming the switching frequency based on the frequency threshold.

Step 504 may include reconfirming the first phase shift angle and the second phase shift angle based on a reconfirmed switching frequency.

Step 506 may include regenerating a drive signal based on a reconfirmed first phase shift angle, a reconfirmed second phase shift angle, and a reconfirmed switching frequency, thereby driving the switching element in the input bridge arm and the switching element in the output bridge arm.

In the present embodiment, the first phase shift angle and the second phase shift angle may be reconfirmed, such that the switching frequency satisfies requirement.

The frequency threshold can be set as the reconfirmed switching frequency. The first phase shift angle and the second phase shift angle are reconfirmed based on the reconfirmed switching frequency, such that the switching frequency satisfies requirement.

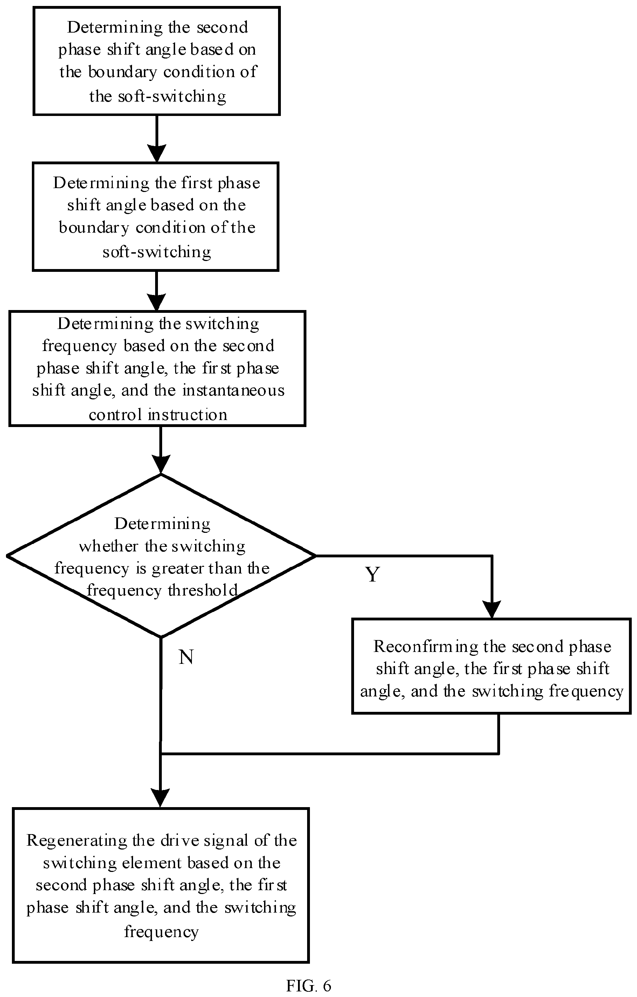

An overall flowchart of a DC/AC circuit control method may refer to FIG. 6, including: determining the second phase shift angle based on the boundary condition of the soft-switching, determining the first phase shift angle based on the boundary condition of the soft-switching, determining the switching frequency based on the second phase shift angle, the first phase shift angle, and the instantaneous control instruction, determining whether the switching frequency is greater than the frequency threshold, if yes, reconfirming the second phase shift angle, the first phase shift angle, and the switching frequency, and regenerating the drive signal of the switching element based on the second phase shift angle, the first phase shift angle, and the switching frequency.

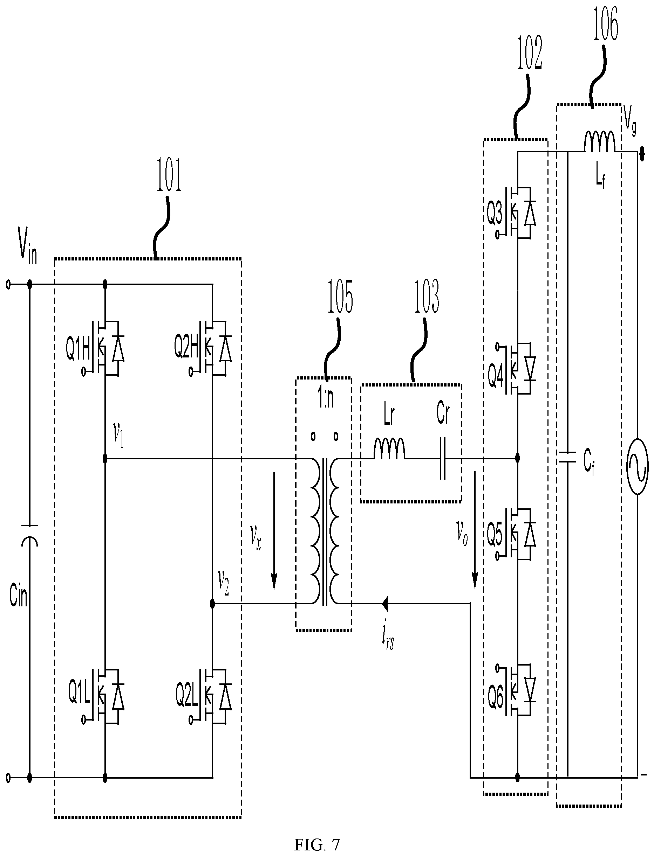

In an exemplary embodiment, a circuit principal diagram of a DC/AC circuit may refer to FIG. 7. An input bridge arm 101 of a DC/AC circuit may adopt a H-bridge structure. An input terminal of the input bridge arm 101 may be connected in parallel to a capacitor $C_{in}$. The input bridge arm 101 may include a switch Q1H, a switch Q1L, a switch Q2H, and a switch Q2L. Specifically, the switch Q1H and the switch Q1L may be connected in series at the input terminal to form one half-bridge arm. A midpoint of the half-bridge arm may provide an output voltage $V_1$ to the ground. The switch Q2H and the switch Q2L may be connected in series at the input terminal to form the other half-bridge arm. A midpoint of the other half-bridge arm may provide an output voltage $V_2$ to the ground. A bridge-arm output voltage $V_x$ of the input bridge arm 101 may be an output voltage difference between the half-bridge arm and the other half-bridge arm. An output bridge arm 102 may include two sets of switching elements connected in series, each of which is configured in a common-source arrangement. Specifically, the two sets of the switching elements may be connected in series between two output ports of the output bridge arm 102 to form a bridge arm. A first set of switching elements in the output bridge arm 102 may include a switch Q3 and a switch Q4 configured in the common-source arrangement. A second set of switching elements may include a switch Q5 and a switch Q6 configured in the common-source arrangement. The two sets of switching elements may be commonly connected to the midpoint of the bridge arm. The output terminal of the output bridge arm 102 may be connected to an alternating power grid via a filter unit 106. The filter unit 106 may include a capacitor $C_f$ connected in parallel to the output terminal of the output bridge arm 102 and an inductor $L_f$ connected to a first output port of the output bridge arm 102. The second output port of the output bridge arm 102 may be connected to one end of a secondary winding of a transforming unit 105. The other end of the secondary winding of the transforming unit 105 may be connected to the midpoint of the output bridge arm 102 via a resonant unit 103. The resonant unit 103 may include an inductor $L_r$ and a capacitor $C_r$ connected in series to each other.

In the present embodiment, the transforming unit 105 may include a transformer. A turn ratio of the primary side and the secondary side of the transformer may be 1: n.

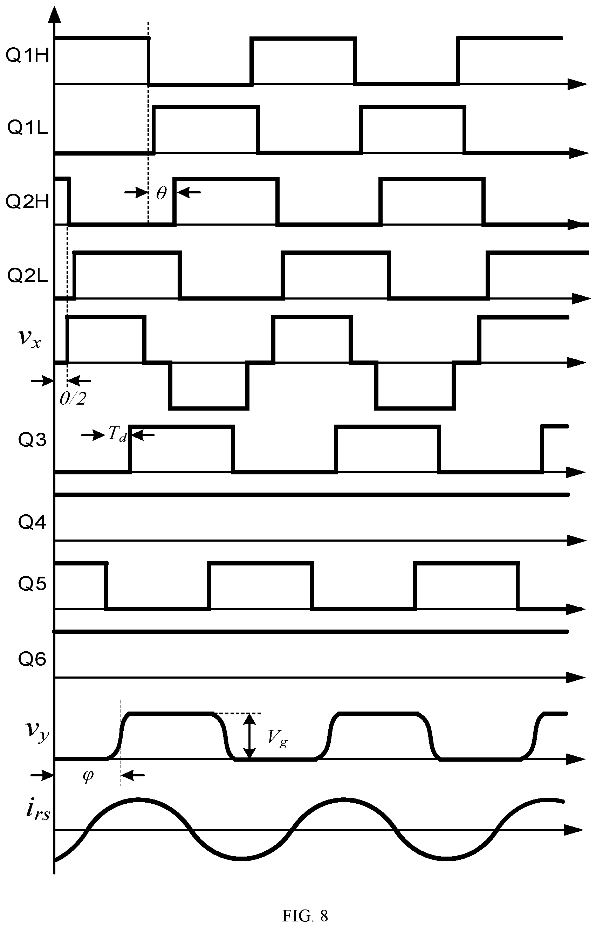

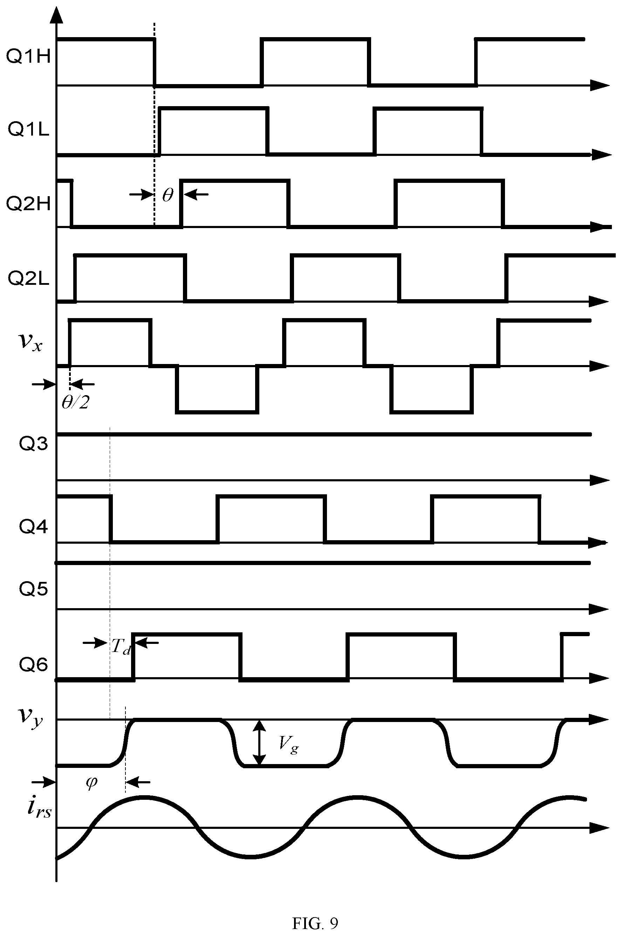

When the output voltage of the DC/AC circuit is in a positive half cycle, an operating waveform of the DC/AC circuit may refer to FIG. 8. When the output voltage of the DC/AC circuit is in a negative half cycle, an operating waveform of the DC/AC circuit may refer to FIG. 9. The switch Q1H and the switch Q1L of the input bridge arm 101 may be in operation complementarily with a duty cycle of 50%, and the switch Q2H and the switch Q2L of the input bridge arm 101 may be in operation complementarily with a duty cycle of 50%. The bridge-arm output voltage $V_x$ between the two half-bridge arms obtained by phase-shift control may be shown in drawings. The second phase shift angle $\theta$ may be a phase difference between the output voltages (the output voltage V1 and the output voltage V2) of the two half-bridge arms. A drive logic of the switch of the output bridge arm 102 may be as follows: during the positive half cycle of the output voltage of the DC/AC circuit, the switch Q4 and switch Q6 may remain in a constant-on state, the switch Q3 and the switch Q5 may be in operation complementarily with a duty cycle of 50%, switching dead time may be $T_d$, and the first phase shift angle $\varphi$ may be the phase difference between a zero crossing point of a fundamental component of the bridge-arm output voltage $v_x$ of the input bridge arm 101 and a zero crossing point of a fundamental component of the bridge-arm output voltage $v_y$ of the output bridge arm 102 (a voltage of two terminals of the switch Q5 and the switch Q6).

During the negative half cycle of the output voltage of the DC/AC circuit, the drive logic of the input bridge arm 101 may remain unchanged. The switch Q3 and switch Q5 may remain in a constant-on state, and the switch $Q_4$ and the switch Q6 may be in operation complementarily with a duty cycle of 50%.

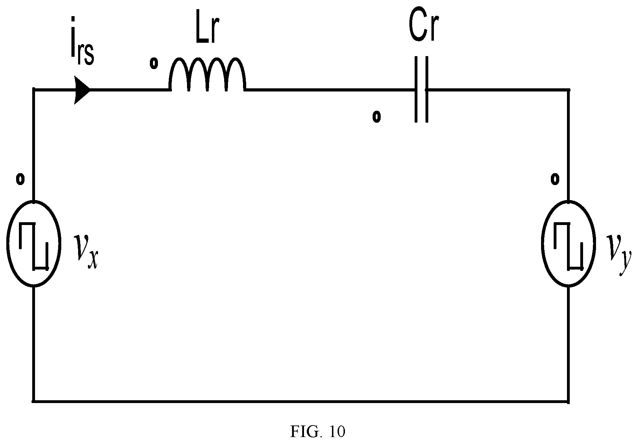

When the fundamental component is only considered, an equivalent model of a circuit may refer to FIG. 10. According to waveforms of the bridge-arm output voltage $v_x$ of the input bridge arm 101 and the bridge-arm output voltage $v_y$ of the output bridge arm 102 in FIG. 10, an expression of the resonant current may satisfy the following formula:

$$i_{rs}(t) = \frac{\left(2\left|V_g\right|\cos\varphi - 4nV_{in}\cos\frac{\theta}{2}\right)\cos\omega_s t + 2\left|V_g\right|\sin\varphi\sin\omega_s t}{\pi X_s},$$

n may represent a turn ratio of the transformer, $X_s$ may represent an impedance of the resonant unit, $\omega_s$ may represent angular frequency corresponding to the switching frequency, $V_g$ may represent an instantaneous value of the output voltage, and $V_{in}$ may be an input voltage of the DC/AC circuit.

At an angle of $\theta/2$, the switch Q2H may be turned off and the switch Q2L may be turned on. When the resonant current $i_{rs}$ is less than 0, a diode of the switch Q2L may continue to conduct after the switch Q2H is turned off, and the switch Q2L may conduct after dead time, thereby realizing zero-voltage turn-on of the switch Q2L. Therefore, the resonant current $i_{rs}$ may be required to satisfy the following expression: $\left.i_{rs}(t)\right|_{t=\frac{\theta}{2\omega_s}} < 0$.

The conditions may be substituted into the expression of the resonant current $i_{rs}$, it can be solved that when the second phase shift angle $\theta$ and the first phase shift angle $\varphi$ satisfy the following first boundary condition, the switch of the input bridge arm may be guaranteed to achieve the zero-voltage turn-on.

The first boundary condition may satisfy the following formula: $\dfrac{\cos\left(\varphi - \dfrac{\theta}{2}\right)}{\cos^2\dfrac{\theta}{2}} < \dfrac{1}{M}$, M may satisfy the following formula: $M = \dfrac{\left|V_g\right|/2}{nV_{in}}$.

According to symmetry of sine signal waveform, as long as the resonant current satisfies the conditions, when the switch Q2L is turned off and the switch Q2H is turned on, the switch Q2H may also achieve the zero-voltage turn-on. An operation of the soft-switching may be achieved during transition between the switch Q1H and the switch Q1L by the symmetry of the circuit.

At the angle of $\varphi$, the switch $Q_5$ may be turned off, and the switch $Q_3$ may be turned on. When the resonant current $i_{rs}$ is greater than 0, a diode of the switch Q3 may continue to conduct after the switch Q5 is turned off, and the switch Q3 may conduct after the dead time, thereby realizing zero-voltage turn-on of the switch Q3.

When the second phase shift angle $\theta$ and the first phase shift angle $\varphi$ satisfy the second boundary condition, the switch of the output bridge arm may be guaranteed to achieve the zero-voltage turn-on.

The second boundary condition may satisfy the following formula: $\cos\dfrac{\theta}{2}\cos\varphi < M$,

According to the symmetry of the sine signal waveform, as long as the resonant current satisfies the above condition, when the switch Q3 is turned off and the switch Q5 is turned on, the switch Q5 can also achieve the zero-voltage turn-on.

During the negative half cycle of the output voltage of the DC/AC circuit, an operation principle may be the same as that in the positive half cycle of the output voltage, and the resonant current $i_{rs}$ may be required to satisfy the same conditions as in the positive half cycle.

In summary, according to the first boundary condition and the second boundary condition, the value ranges of the second phase shift angle $\theta$ and the first phase shift angle $\varphi$ that can simultaneously achieve an operation of the soft-switching of the switching element in the input bridge arm and the switching element in the output bridge arm may be obtained.

The second phase shift angle $\theta$ and the first phase shift angle $\varphi$ may take any value within a corresponding range. In some embodiments, the second phase shift angle may be decoupled from the first phase shift angle, i.e., by limiting the value of the second phase shift angle $\theta$, the value ranges of the second phase shift angle $\theta$ and the first phase shift angle $\varphi$

may always be within the first boundary condition, thereby reducing the complexity of the algorithm and reducing the calculation time. The second phase shift angle θ may be required to satisfy the following formula: $\theta < 2\arccos\left(\sqrt{M}\right)$.

Based on this, the first phase shift angle $\varphi$ may be selected according to a selected second phase shift angle θ, and the first phase shift angle $\varphi$ may satisfy the following formula:

$$\varphi > \arccos\left(\frac{M}{\cos\dfrac{\theta}{2}}\right).$$

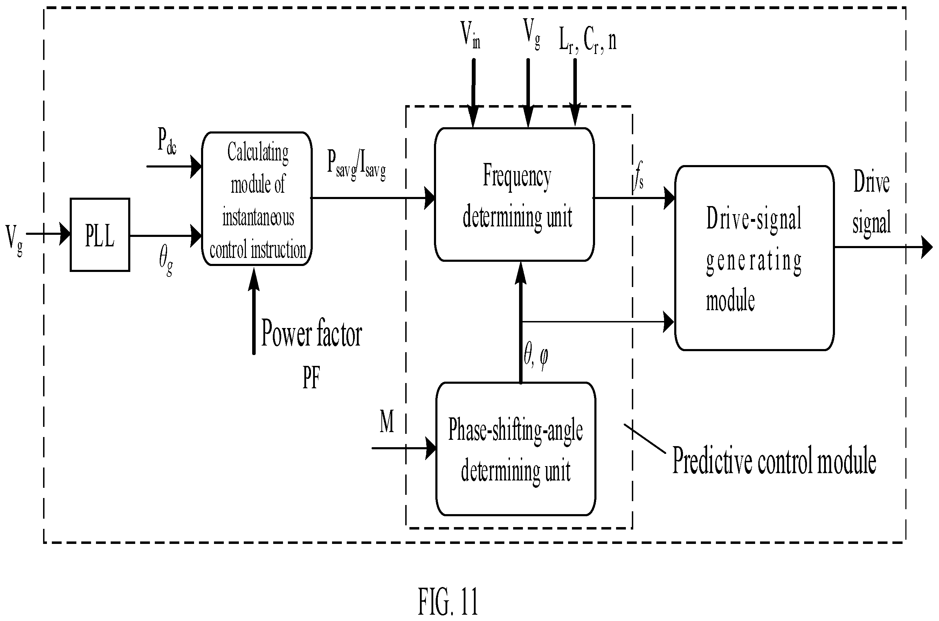

FIG. 11 is a control block diagram of a controller in an embodiment of the present invention. Referring to FIG. 11, the controller may include: a predictive control module, which is configured for determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission.

Specifically, the predictive control module may include a phase-shift-angle determining unit and a frequency determining unit. The phase-shift-angle determining unit is configured to determine the second phase shift angle and the first phase shift angle based on the output voltage $V_g$ and the input voltage $V_{in}$ of the DC/AC circuit and the transforming parameter of the transforming unit. The frequency determining unit is configured to determine switching frequency of switching elements in the input bridge arm 101 and the output bridge arm 102 based on the first phase shift angle $\varphi$, the second phase shift angle θ, the input voltage $V_{in}$ and the output voltage $V_g$ of the DC/AC circuit, the resonant cavity parameter of the resonant unit, the instantaneous control instruction, and the transforming parameter of the transforming unit.

Furthermore, the predictive control module may further include a calculating module of instantaneous control instruction, which is configured to obtain an instantaneous power instruction $P_{savg}$ or an instantaneous current instruction $I_{savg}$ based on a grid voltage phase $\theta_g$, a system power instruction $P_{dc}$ and a power factor PF.

Furthermore, the predictive control module may include a PLL (Phase-Locked Loop) module configured to obtain the grid voltage phase $\theta_g$.

Moreover, the predictive control module may include a drive-signal generating module configured to generate a drive signal of the switching elements based on the second phase shift angle θ, the first phase shift angle $\varphi$ and the switching frequency $f_s$.

When the fundamental component is only considered, taking the instantaneous control instruction as the instantaneous power instruction as an example, an instantaneous power
transmission of the DC/AC circuit may satisfy the following formula:

$$P_{savg} = \frac{4nV_{in}\left|V_g\right|\cos\dfrac{\theta}{2}\sin\varphi}{\pi^2\left(2\pi f_s L_r - \dfrac{1}{2\pi f_s C_r}\right)},$$

$f_s$ may be a switching frequency, $V_{in}$ may be an input voltage, $V_g$ may be an instantaneous value of the output voltage, and n may be a turn ratio of the transformer. Based on a certain second phase shift angle θ and a certain first phase shift angle $\varphi$, the switching frequency fs may be obtained based on the system power instruction $P_{dc}$ and satisfy the following formula:

$$f_s = \frac{\dfrac{4nV_{in}\left|V_g\right|\cos\dfrac{\theta}{2}\sin\varphi}{\pi^2 P_{s,avg}} + \sqrt{\left(\dfrac{4nV_{in}\left|V_g\right|\cos\dfrac{\theta}{2}\sin\varphi}{\pi^2 P_{s,avg}}\right)^2 + \dfrac{4L_r}{C_r}}}{4\pi L_r}.$$

Lr may represent a value of an inductor Lr, and Cr may represent a value of a capacitor Cr.

Therefore, the drive signal of the switch may be obtained based on the second phase shift angle θ, the first phase

shift angle $\varphi$, and the switching frequency $f_s$ to realize soft-switching control and system power control.

When the fundamental component is only considered, the instantaneous current transmission of the DC/AC circuit may satisfy a current transmission model. Based on a relationship between current and power, the current transmission model may be converted from a power transmission model. Based on a certain second phase shift angle $\theta$ and a certain first phase shift angle $\varphi$, the switching frequency $f_s$ may be obtained based on the instantaneous current instruction $I_{savg}$. Calculating the switching frequency $f_s$ may only require polarity information of the grid voltage.

Therefore, the drive signal of the switching pipe may be obtained based on the second phase shift angle $\theta$, the first phase shift angle $\varphi$, and the switching frequency $f_s$ to realize the soft-switching control and the system power control.

For a DC/AC circuit with the other circuit structures, a resonant current expression may be established based on a circuit structure, a circuit parameter and an operating waveform of the output voltage in positive or negative half cycle. The phase shift angle of the DC/AC circuit may be determined based on the boundary condition of the soft-switching established according to the resonant current expression. In addition, a power transmission module or a current transmission module corresponding to the DC/AC circuit may be established to obtain a switching frequency expression. The switching frequency may be calculated based on the switching frequency expression. The drive signal of the switch may be obtained based on the phase shift angle and the switching frequency of the DC/AC circuit to realize soft-switching control and system power control.

A DC/AC circuit corresponding to the above control method is further provided according to the embodiments of the present invention. FIG. 1 and FIG. 2 are schematic diagrams of a DC/AC circuit in an embodiment of the present invention. The circuit includes an input bridge arm 101, an output bridge arm 102, a resonant unit 103 connected between the input bridge arm 101 and the output bridge arm 102, and a controller 104 connected to the input bridge arm 101 and the output bridge arm 102.

The controller 104 is configured to determine switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission.

In the present invention, the controller determines the switching frequency of the switching element in the input bridge arm and the switching element in the output bridge arm, and the phase shift angle of the DC/AC circuit based on the output voltage and the input voltage of the DC/AC circuit, the resonant parameter of the resonant unit, and the instantaneous control instruction representing power transmission. In the present invention, an open-loop predictive control of instantaneous power or instantaneous current may be realized by cooperation of the phase shift angle of the DC/AC circuit and the switching frequency, the DC/AC circuit may be simple to control, and response speed of the DC/AC circuit may be fast. In addition, the control method may eliminate a current sampling circuit, simplify a circuit structure, and reduce costs.

In an embodiment, the input bridge arm may include a half-bridge structure. The phase shift angle may include a first phase shift angle between a bridge-arm output voltage of the input bridge arm and a bridge-arm output voltage of the output bridge arm. The switching frequency may be determined based on the first phase shift angle, the output voltage and the input voltage of the DC/AC circuit, the resonant parameter of the resonant unit, and the instantaneous control instruction.

In an embodiment, the input bridge arm may include a full bridge structure. The phase shift angle may include a first phase shift angle between a bridge-arm output voltage of the input bridge arm and a bridge-arm output voltage of the output bridge arm and a second phase shift angle between output voltages of two half-bridge arms of the input bridge arm. The switching frequency may be determined based on the first phase shift angle, the second phase shift angle, the output voltage and the input voltage of the DC/AC circuit, the resonant parameter of the resonant unit, and the instantaneous control instruction.

In an embodiment, the circuit further may include a transforming unit connected between the input bridge arm and the output bridge arm. The switching frequency may be determined based on the first phase shift angle, the second phase shift angle, the input voltage and the output voltage of the DC/AC circuit, a resonant cavity parameter of the resonant unit, the instantaneous control instruction, and a transforming parameter of the transforming unit.

In an embodiment, the instantaneous control instruction may include an instantaneous power instruction or an instantaneous current instruction.

In an embodiment, the instantaneous control instruction may be calculated and obtained based on a grid voltage phase, a system power instruction, and a power factor.

In an embodiment, the second phase shift angle $\theta$ may satisfy the following formula:

$$\theta < 2\arccos\left(\sqrt{M}\right),$$

M may satisfy the following formula: $M = \dfrac{\left|V_g\right|/2}{nV_{in}}$ , $V_{in}$ may represent the input voltage of the DC/AC circuit, $V_g$ may represent a transient value of the output voltage of the DC/AC circuit, and n may represent the transforming parameter of the transforming unit.

The controller may determine value ranges of the first phase shift angle and the second phase shift angle based on the boundary condition of the soft-switching. The controller may determine the first phase shift angle and the second phase shift angle based on the value ranges of the first phase shift angle and the second phase shift angle.

In an embodiment, the first phase shift angle $\varphi$ may satisfy the following formula:

$$\varphi > \arccos\left(\frac{M}{\cos\dfrac{\theta}{2}}\right).$$

In an embodiment, the output bridge arm may include a cycloconverter configured to perform an alternating-alternating transformation.

In an embodiment, the controller 104 may generate a drive signal based on the phase shift angle and the switching frequency to drive the switching element in the input bridge arm and the switching element in the output bridge arm.

In a specific embodiment, referring to FIG. 7, an input bridge arm 101 of the DC/AC circuit may adopt a H-bridge structure. An input terminal of the input bridge arm 101 may be connected in parallel to a capacitor $C_{in}$. The input bridge arm 101 may include a switch Q1H, a switch Q1L, a switch Q2H, and the switch Q2L. The switch Q1H and the switch Q1L may be connected in series at the input terminal to form one half-bridge arm. A midpoint of the half-bridge arm may provide an output voltage $V_1$ to the ground. The switch Q2H and the switch Q2L may be connected in series at the input terminal to form the other half-bridge arm. A midpoint of the other half-bridge arm may provide an output voltage $V_2$ to the ground. A bridge-arm output voltage $V_x$ of the input bridge arm 101 may be an output voltage difference between the half-bridge arm and the other half-bridge arm. The output bridge arm 102 may include two sets of switching elements connected in series, each of which is configured in a common-source arrangement. Specifically, the two sets of the switching elements may be connected in series between two output ports of the input bridge arm 102 to form a bridge arm. A first set of switching elements of the input bridge arm 102 includes a switch Q3 and a switch Q4 configured in the common-source arrangement. A second set of switching elements may include a switch Q5 and a switch Q6 configured in the common-source arrangement. The two sets of switching elements may be commonly connected to the midpoint of the bridge arm. The output terminal of the output bridge arm 102 may be connected to alternating power grid via a filter unit 106. The filter unit 106 may include a capacitor $C_f$ connected in parallel to the output terminal of the output bridge arm 102 and an inductor $L_f$ connected to a first output port of the output bridge arm 102. The second output port of the output bridge arm 102 may be connected to one end of a secondary winding of the transforming unit 105. The other end of the secondary winding of the transforming unit 105 may be connected at the midpoint of the output bridge arm 102 via the resonant unit 103. The resonant unit 103 may include an inductor $L_r$ and a capacitor $C_r$ connected in series to each other.

In the present embodiment, the transforming unit 105 may include a transformer. A turn ratio of the primary side and the secondary side of the transformer may be 1: n.

When the output voltage of the DC/AC circuit is in the positive half cycle, an operating waveform of the DC/AC circuit may refer to FIG. 8. When the output voltage of the DC/AC circuit is in the negative half cycle, an operating waveform of the DC/AC circuit may refer to FIG. 9. The switch Q1H and the switch Q1L of the input bridge arm 101 may be in operation complementarily with a duty cycle of 50%, and the switch Q2H and the switch Q2L of the input bridge arm 101 may be in operation complementarily with a duty cycle of 50%. The bridge-arm output voltage $V_x$ between the half-bridge arm and the other half-bridge arm obtained by phase-shift control may be shown in drawings. The second phase shift angle $\theta$ may be a phase difference between output voltages (the output voltage $V_1$ and the output voltage $V_2$) of the half-bridge arm and the other half-bridge arm. A drive logic of the switch of the output bridge arm 102 may be as follows: during the positive half cycle of the output voltage of the DC/AC circuit, the switch Q4 and switch Q6 may remain in a constant-on state, the switch Q3 and the switch Q5 may be in operation complementarily with a duty cycle of 50%, the switching dead time may be $T_d$, and the first phase shift angle $\varphi$ may be the phase difference between a zero crossing point of a fundamental component of the bridge arm output voltage $v_x$ of the input bridge arm 101 and a zero crossing point of a fundamental component of the bridge arm output voltage $v_y$ of the output bridge arm 102 (a voltage of two terminals of the switch Q5 and the switch Q6).

During the negative half cycle of the output voltage of the DC/AC circuit, the drive logic of the input bridge arm 101 may remain unchanged. The switch Q3 and switch Q5 remain in a constant-on state. The switch Q4 and the switch Q6 may be in operation complementarily with a duty cycle of 50%.

Since a fact that processing and functions achieved by the DC/AC circuit in the present embodiment correspond to the embodiments, principles, and examples of the aforementioned control methods, the description of the present embodiment is not described in detail. Please refer to relevant explanations in aforementioned embodiments, which will not be repeated herein.

The various technical features of the above embodiments can be combined in any way. In order to make the description concise, not all possible combinations of the various technical features in the above embodiments have been described. However, as long as there is no contradiction in the combination of these technical features, they should be considered within the scope of the description.

The above-described embodiments express only several embodiments of the present invention, which are described in a more specific and detailed manner, but are not to be construed as a limitation on the scope of the present invention. For the skill in the art, several deformations and improvements can be made without departing from the conception of the present invention, all of which fall within the scope of protection of the present invention. Therefore, the scope of protection of the present invention shall be subject to the attached claims.

**Claims**

1. A DC/AC circuit control method, wherein the DC/AC circuit is configured to convert a direct current into an alternating current, and comprises an input bridge arm, an output bridge arm, and a resonant unit connected between the input bridge arm and the output bridge arm, and **characterized in that** the method comprises:
determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission.

2. The method of claim 1, wherein when the input bridge arm comprises a half-bridge structure, the phase shift angle comprises a first phase shift angle between a bridge-arm output voltage of the input bridge arm and a bridge-arm output voltage of the output bridge arm, and the switching frequency is determined based on the first phase shift angle, the output voltage and the input voltage of the DC/AC circuit, the resonant parameter of the resonant unit, and the instantaneous control instruction.

3. The method of claim 1, wherein when the input bridge arm comprises a full bridge structure, the phase shift angle comprises a first phase shift angle between a bridge-arm output voltage of the input bridge arm and a bridge-arm output voltage of the output bridge arm and a second phase shift angle between output voltages of two half-bridge arms of the input bridge arm, and the switching frequency is determined based on the first phase shift angle, the second phase shift angle, the output voltage and the input voltage of the DC/AC circuit, the resonant parameter of the resonant unit, and the instantaneous control instruction.

4. The method of claim 3, wherein the DC/AC circuit further comprises a transforming unit connected between the input bridge arm and the output bridge arm, the switching frequency is determined based on the first phase shift angle, the second phase shift angle, the output voltage and the input voltage of the DC/AC circuit, a resonant cavity parameter of the resonant unit, the instantaneous control instruction, and a transforming parameter of the transforming unit.

5. The method of claim 1, wherein the instantaneous control instruction comprises an instantaneous power instruction or an instantaneous current instruction.

6. The method of claim 1, wherein the instantaneous control instruction is calculated based on a grid voltage phase, a system power instruction, and a power factor.

7. The method of claim 4, wherein the second phase shift angle denoted as $\theta$ satisfies the following formula:

$$\theta < 2\arccos\left(\sqrt{M}\right),$$

wherein M satisfies the following formula: $M = \dfrac{\left|V_g\right|/2}{nV_{in}}$, $V_{in}$ represents the input voltage of the DC/AC circuit, $V_g$

represents a transient value of the output voltage of the DC/AC circuit, and $n$ represents the transforming parameter of the transforming unit.

8. The method of claim 7, wherein the first phase shift angle denoted as $\varphi$ satisfies the following formula:

$$\varphi > \arccos\left(\frac{M}{\cos\frac{\theta}{2}}\right).$$

9. A DC/AC circuit, **characterized by** comprising an input bridge arm, an output bridge arm, a resonant unit connected between the input bridge arm and the output bridge arm, and a controller connected to the input bridge arm and the output bridge arm,
wherein the controller is configured for determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission.

10. The circuit of claim 9, wherein the input bridge arm comprises a half-bridge structure, the phase shift angle comprises a first phase shift angle between a bridge-arm output voltage of the input bridge arm and a bridge-arm output voltage of the output bridge arm, and the switching frequency is determined based on the first phase shift angle, the output voltage and the input voltage of the DC/AC circuit, the resonant parameter of the resonant unit, and the instantaneous control instruction.

11. The circuit of claim 9, wherein the input bridge arm comprises a full bridge structure, the phase shift angle comprises a first phase shift angle between a bridge-arm output voltage of the input bridge arm and a bridge-arm output voltage of the output bridge arm and a second phase shift angle between output voltages of two half-bridge arms of the input bridge arm, and the switching frequency is determined based on the first phase shift angle, the second phase shift angle, the output voltage and the input voltage of the DC/AC circuit, the resonant parameter of the resonant unit, and the instantaneous control instruction.

12. The circuit of claim 11, further comprising a transforming unit connected between the input bridge arm and the output bridge arm, wherein the switching frequency is determined based on the first phase shift angle, the second phase shift angle, the output voltage and the input voltage of the DC/AC circuit, a resonant cavity parameter of the resonant unit, the instantaneous control instruction, and a transforming parameter of the transforming unit.

13. The circuit of claim 9, wherein the instantaneous control instruction comprises an instantaneous power instruction or an instantaneous current instruction.

14. The circuit of claim 9, wherein the instantaneous control instruction is calculated based on a grid voltage phase, a system power instruction, and a power factor.

15. The circuit of claim 12, wherein the second phase shift angle denoted as $\theta$ satisfies the following formula:

$$\theta < 2\arccos\left(\sqrt{M}\right),$$

wherein M satisfies the following formula: $M = \dfrac{|V_g|/2}{nV_{in}}$ , $V_{in}$ represents the input voltage of the DC/AC circuit, $V_g$ represents a transient value of the output voltage of the DC/AC circuit, and $n$ represents the transforming parameter of the transforming unit.

16. The circuit of claim 15, wherein the first phase shift angle denoted as $\varphi$ satisfies the following formula:

$$\varphi > \arccos\left(\frac{M}{\cos\dfrac{\theta}{2}}\right).$$

17. The circuit of claim 9, wherein the output bridge arm comprises a cycloconverter configured to perform an alternating-alternating transformation.

101       103       102

| Input bridge arm | Resonant unit | Output bridge arm |

Controller

104

FIG. 1

101   105   103   102   106

| Input bridge arm | Transforming unit | Resonant unit | Output bridge arm | Filter unit |

Controller

104

FIG. 2

Determining switching frequency of a switching element in the input bridge arm and a switching element in the output bridge arm, and a phase shift angle of the DC/AC circuit based on an output voltage and an input voltage of the DC/AC circuit, a resonant parameter of the resonant unit, and an instantaneous control instruction representing power transmission

S302

Generating a drive signal based on the phase shift angle and the switching frequency to drive the switching element in the input bridge arm and the switching element in the output bridge arm

S304

FIG. 3

Determining the value ranges of the first phase shift angle and the second phase shift angle based on the boundary conditions of the soft-switching

S402

Determining the first phase shift angle and the second phase shift angle based on the value ranges of the first phase shift angle and the second phase shift angle, respectively

S404

FIG. 4

Reconfirming the switching frequency based on the frequency threshold ⟋S502

Reconfirming the first phase shift angle and the second phase shift angle based on a reconfirmed switching frequency ⟋S504

Regenerating a drive signal based on a reconfirmed first phase shift angle, a reconfirmed second phase shift angle, and a reconfirmed switching frequency, thereby driving the switching element in the input bridge arm and the switching element in the output bridge arm ⟋S506

FIG. 5

Determining the second phase shift angle based on the boundary condition of the soft-switching

Determining the first phase shift angle based on the boundary condition of the soft-switching

Determining the switching frequency based on the second phase shift angle, the first phase shift angle, and the instantaneous control instruction

Determining whether the switching frequency is greater than the frequency threshold

Y

N

Reconfirming the second phase shift angle, the first phase shift angle, and the switching frequency

Regenerating the drive signal of the switching element based on the second phase shift angle, the first phase shift angle, and the switching frequency

FIG. 6

FIG. 7

FIG. 8

FIG. 9

FIG. 10

FIG. 11

## INTERNATIONAL SEARCH REPORT

| International application No. |
|---|
| **PCT/CN2023/125313** |

| A. | CLASSIFICATION OF SUBJECT MATTER |
|---|---|

H02M 7/5387(2007.01)i; H02M 1/088(2006.01)i

According to International Patent Classification (IPC) or to both national classification and IPC

| B. | FIELDS SEARCHED |
|---|---|

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, USTXT, CNKI, IEEE: 逆变, DC, AC, 桥臂, 谐振, 瞬时, 开关频率, 移相角, direct, alternating, switching, frequency, phase, shift, angle, voltage, output, input, resonance

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116032143 A (HANGZHOU HOYMILES POWER ELECTRONICS CO., LTD.) 28 April 2023 (2023-04-28) <br> description, paragraphs [0004]-[0193], and figures 1-11 | 1-17 |
| A | CN 113872451 A (HANGZHOU HOYMILES POWER ELECTRONICS CO., LTD.) 31 December 2021 (2021-12-31) <br> description, paragraphs [0020]-[0064], and figures 1-7 | 1-17 |
| A | CN 103178742 A (BEIJING JIAOTONG UNIVERSITY) 26 June 2013 (2013-06-26) <br> entire document | 1-17 |
| A | CN 111490683 A (BEIJING INSTITUTE OF TECHNOLOGY) 04 August 2020 (2020-08-04) <br> entire document | 1-17 |
| A | CN 113364298 A (ZHEJIANG UNIVERSITY) 07 September 2021 (2021-09-07) <br> entire document | 1-17 |
| A | WO 2022166566 A1 (ALTENERGY POWER SYSTEM INC.) 11 August 2022 (2022-08-11) <br> entire document | 1-17 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **08 January 2024** | **16 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/125313**

| Patent document cited in search report | | | Publication date (day/month/year) | Patent family member(s) | | | Publication date (day/month/year) |
|---|---|---|---|---|---|---|---|
| CN | 116032143 | A | 28 April 2023 | None | | | |
| CN | 113872451 | A | 31 December 2021 | CN | 113872451 | B | 11 March 2022 |
| | | | | WO | 2023098826 | A1 | 08 June 2023 |
| CN | 103178742 | A | 26 June 2013 | CN | 103178742 | B | 27 November 2018 |
| CN | 111490683 | A | 04 August 2020 | CN | 111490683 | B | 05 March 2021 |
| CN | 113364298 | A | 07 September 2021 | CN | 113364298 | B | 24 November 2023 |
| WO | 2022166566 | A1 | 11 August 2022 | CN | 112910268 | A | 04 June 2021 |
| | | | | CN | 112910268 | B | 12 April 2022 |

Form PCT/ISA/210 (patent family annex) (July 2022)

**REFERENCES CITED IN THE DESCRIPTION**

**Patent documents cited in the description**

- CN 202211729940